Europäisches Patentamt
European Patent Office
Office européen des brevets

(19)

(11) Veröffentlichungsnummer: **0 078 437 A2**

(12) # EUROPÄISCHE PATENTANMELDUNG

(21) Anmeldenummer: **82109597.3**

(22) Anmeldetag: **18.10.82**

(51) Int. Cl.³: **C 09 B 62/467**, D 06 P 3/10

(30) Priorität: **29.10.81 DE 3142852**

(43) Veröffentlichungstag der Anmeldung: **11.05.83 Patentblatt 83/19**

(84) Benannte Vertragsstaaten: **CH DE FR GB IT LI**

(71) Anmelder: **BAYER AG, Zentralbereich Patente, Marken und Lizenzen, D-5090 Leverkusen 1, Bayerwerk (DE)**

(72) Erfinder: **von Oertzen, Klaus, Dr., Hahnenweg 8, D-5000 Köln 80 (DE)**

(54) **Anthrachinon-Reaktivfarbstoffe, Verfahren zu ihrer Herstellung und ihre Verwendung zum Färben und Bedrucken von stickstoffhaltigen Materialien.**

(57) Die neuen Reaktivfarbstoffe der allgemeinen Formel

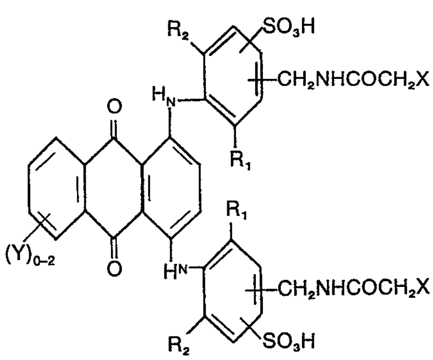

in welcher X, Y, $R_1$ und $R_2$ die im Anmeldungstext angegebene Bedeutung besitzen, eignen sich besonders für das Reaktivfärben und -drucken von stickstoffhaltigen Materialien, wie natürlichen und synthetischen Polyamiden, insbesondere von Wolle.

EP 0 078 437 A2

0078437

BAYER AKTIENGESELLSCHAFT 5090 Leverkusen, Bayerwerk

Zentralbereich
Patente, Marken und Lizenzen Er/ABc

# Anthrachinon-Reaktivfarbstoffe, Verfahren zu ihrer Herstellung und ihre Verwendung zum Färben und Bedrucken von stickstoffhaltigen Materialien

Die vorliegende Erfindung betrifft neue Reaktivfarbstoffe der allgemeinen Formel:

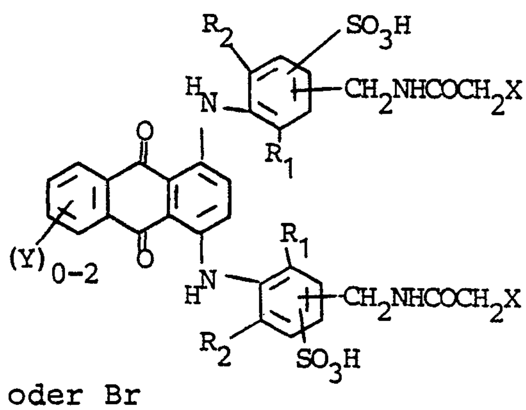

(I)

worin

X = Cl oder Br

Y = Cl oder OH und

$R_1$, $R_2$ unabhängig voneinander $C_1$-$C_6$-Alkyl bedeuten.

Die neuen Farbstoffe werden erhalten, indem man Anthrachinonverbindungen der Formel

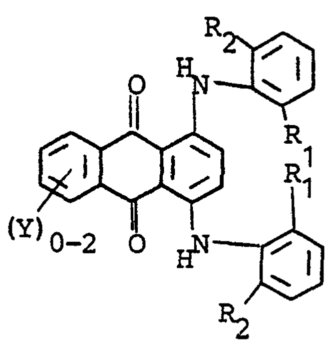

(II)

worin $R_1$, $R_2$ und Y die oben angegebene Bedeutung haben, mit Verbindungen der Formel

$$HOCH_2\text{-}NHCO\text{-}CH_2X \qquad (III)$$

worin X die oben angegebene Bedeutung hat, in Gegenwart wasserabspaltender Mittel zu Verbindungen der Formel

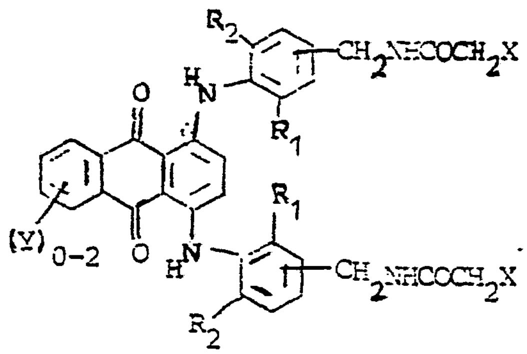

(IV)

kondensiert und die so erhaltenen Zwischenprodukte sulfonierenden Bedingungen unterwirft.

Die Kondensation der Farbbasen (II) mit den Verbindungen (III) wird vorzugsweise in wäßrig starker Schwefelsäure als wasserabspaltenden Mittel durchgeführt, wobei die Temperatur so zu führen ist, daß eine Sulfonierung vermieden wird. Die Sulfonierung der Zwischenprodukte (IV) zu den Farbstoffen (I) wird in rauchender Schwefelsäure mit ausreichendem Gehalt an freiem $SO_3$ vorgenommen.

Die bevorzugte Ausführungsform der Farbstoffherstellung besteht darin, daß man Farbbasen der Formel (II) bei Temperaturen von -15 bis +20°C, vorzugsweise -10 bis 0°C, in 90 bis 100 %iger, vorzugsweise 96 %iger Schwefelsäure löst, die notwendige Menge an Verbindung der Formel (III) zusetzt und die Kondensation bei 0-10° zu Ende gehen läßt. Bei dieser Stufe tritt also noch keine Sulfonierung ein.

Durch Zugabe von rauchender Schwefelsäure mit ausreichend hohem Gehalt an freiem $SO_3$, beispielsweise 50-65 %igem Oleum, stellt man dann sulfonierende Bedingungen her. Die dadurch erhaltenen Farbstoffe der Formel (I) werden isoliert, indem man z.B. das Reaktionsgemisch in Eiswasser austrägt, dem gegebenenfalls Natrium- oder Kaliumchlorid zugesetzt sein kann, den abgeschiedenen Farbstoff absaugt, mit Natrium- oder Kaliumchloridlösung wäscht, wenn nötig die Restsäure neutralisiert und den Farbstoff trocknet.

Die neuen Farbstoffe der Formel (I) eignen sich besonders für das Reaktiv-Färben und -Drucken von N-haltigen Materialien, wie natürlichen und synthetischen Polyamiden, insbesondere von Wolle nach den bei dieser Applikationsart üblichen Methoden. Man erhält klare rotstichig blaue bis grünblaue Färbungen und Drucke mit sehr guten Naß- und Lichtechtheiten.

Bei Temperaturangaben in den Beispielen handelt es sich um °C. Die Formeln der Farbstoffe in der Beschreibung und den Beispielen sind die der freien Säuren. Die Farbstoffe werden im allgemeinen in Form ihrer Alkalisalze, insbesondere der Natrium- oder Kaliumsalze isoliert und angewandt.

Der Farbton der Färbungen auf Wolle ist zusätzlich in Ziffern gemäß der Hue Indication Chart des Color Index gekennzeichnet; außerdem sind die beiden Maxima der Spektren der wäßrigen Farbstofflösungen angegeben.

0078437

Beispiel 1

In 825 g 96 %ige $H_2SO_4$ werden bei -5 bis 0° 150 g 1,4-bis(6'-Methyl-2'-ethyl-anilino-)anthrachinon eingetragen und gelöst. Anschließend werden 86 g N-Hydroxymethylchloracetamid bei der gleichen Temperatur eingetragen. Man rührt bei 0 bis+2°C, bis die zweifache Kondensation beendet ist. Nun werden bei 0 bis +10° 564 g 65 %iges Oleum zugetropft. Bei 20 bis 25° führt man die so eingeleitete Disulfierung zu Ende. Zur Aufarbeitung trägt man auf ein Gemisch von 2,1 kg Eis, 1,5 l Wasser und 600 g Natriumchlorid aus, saugt den ausgefallenen Farbstoff ab und wäscht mit 25 %iger Natriumchloridlösung nahezu neutral. Die Restsäure wird durch Anschlagen mit Sodalösung neutralisiert. Das so erhaltene Na-Salz des Farbstoffs der Formel

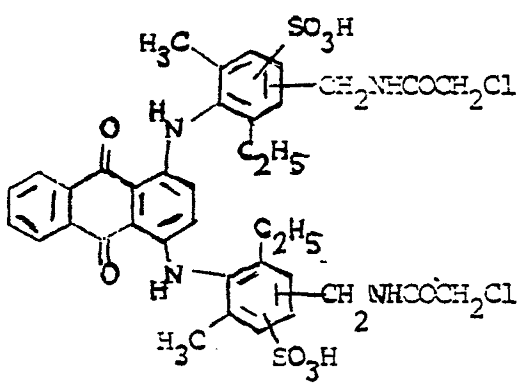

wird zweckmäßig unter milden Bedingungen, z.B. bei 50° im Vakuum getrocknet. Er liefert auf Wolle klare rotstichig blaue Färbungen (CI 14) mit sehr guten Echtheitseigenschaften.
Maxima: 582,626 nm

Beispiel 2

Ersetzt man die 150 g 1,4-bis-(6'-Methyl-2'-ethyl-anilino-)anthrachinon des Beispiels 1 durch die äquivalente Menge 1,4-bis-(2',6'-Dimethylanilino-) anthrachinon und verfährt im übrigen wie dort beschrieben, so erhält man einen Farbstoff, der den des Beispiels 1 in Ton und Eigenschaften sehr ähnlich ist. Maxima: 580,624 nm.

Analog dem Beispiel 1 lassen sich durch Verwendung der entsprechenden Ausgangsverbindungen die in der Tabelle aufgeführten Farbstoffe der allgemeinen Formel

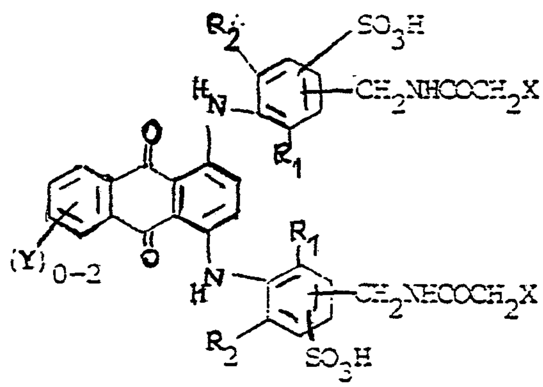

(I)

herstellen:

| Beispiel | $R_1$ | $R_2$ | X | Y | Farbton auf Wolle allgemein | Farbton auf Wolle nach CI | Maxima nm |
|---|---|---|---|---|---|---|---|
| 3 | $C_2H_5$ | $C_2H_5$ | Cl | - | rotst. blau | 14 | 582,626 |
| 4 | $CH_3$ | $C_2H_5$ | Br | - | " | " | 582,626 |
| 5 | $CH_3$ | $CH_3$ | Cl | 6-Cl | blau | 14-15 | 585,630 |

| Beispiel | $R_1$ | $R_2$ | X | Y | Farbton auf Wolle allgemein | nach CI | Maxima nm |
|---|---|---|---|---|---|---|---|
| 6 | $CH_3$ | $CH_3$ | Cl | 5,8-$(OH)_2$ | grünblau | 16 | 608,661 |
| 7 | $CH_3$ | $C_2H_5$ | Cl | 6,7-$Cl_2$ | grünstichig blau | 15 | 596,644 |
| 8 | $CH_3$ | $CH_3$ | Cl | 5,8-$Cl_2$ | " | 15 | 603, 646 |

Patentansprüche

1. Farbstoffe der Formel

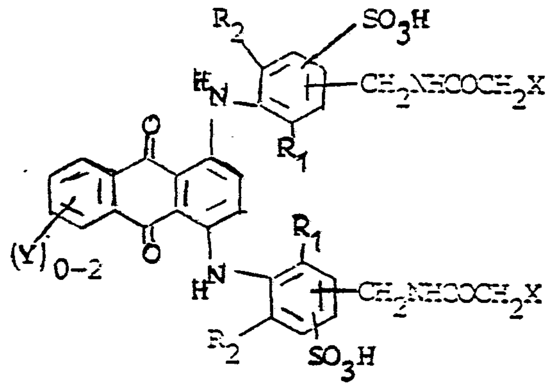

(I)

worin

X = Cl oder Br

Y = Cl oder OH

$R_1$, $R_2$ = unabhängig voneinander $C_1$-$C_6$-Alkyl.

2. Farbstoffe der Formel

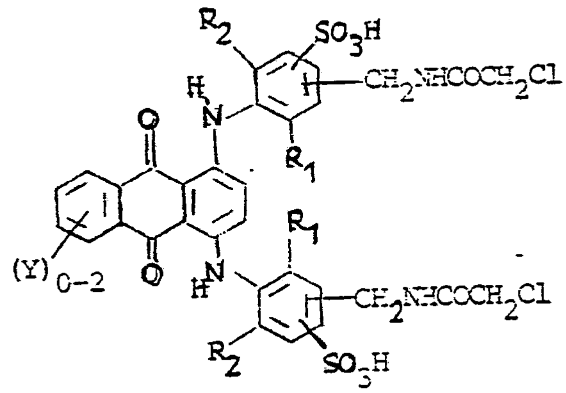

worin

Y = Cl oder OH

$R_1$, $R_2$ unabhängig voneinander $CH_3$ oder $C_2H_5$.

3. Farbstoff der Formel

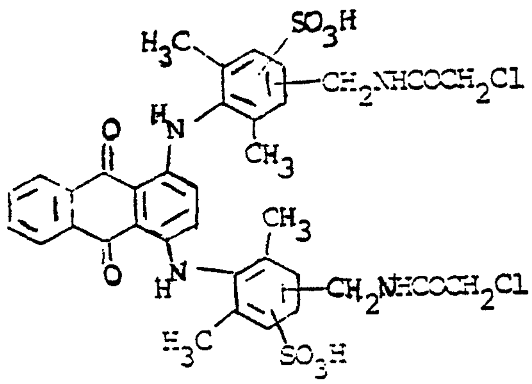

4. Farbstoff der Formel

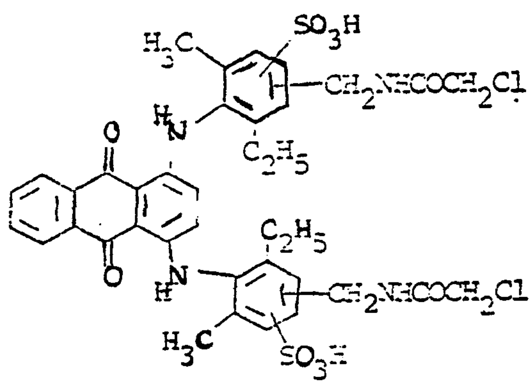

5. Verfahren zur Herstellung der Farbstoffe der Formel (I) aus Anspruch 1, dadurch gekennzeichnet, daß man Verbindungen der Formel

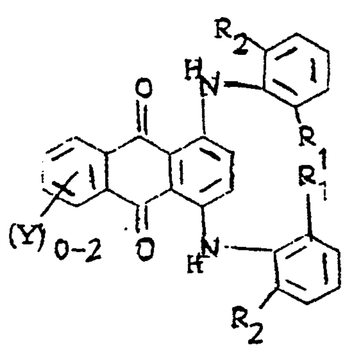

(II)

worin Y, $R_1$ und $R_2$ die in Anspruch 1 angegebene Bedeutung haben, mit Verbindungen der Formel

$HOCH_2NHCOCH_2X$ (III),

worin X die in Anspruch 1 angegebene Bedeutung hat, unter sauren Bedingungen umsetzt und die so erhaltenen Zwischenprodukte der Formel

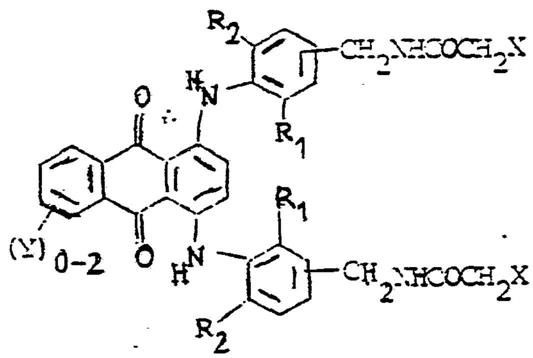

(IV)

anschließend sulfoniert.

6. Verfahren zur Herstellung der Farbstoffe der Formel (I) des Anspruchs 1, dadurch gekennzeichnet, daß man Verbindungen der Formel

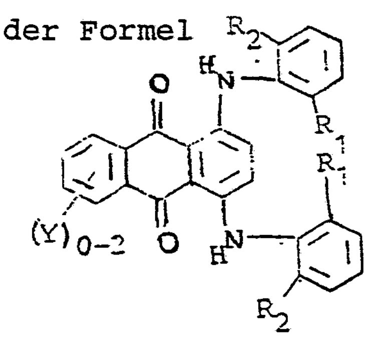

(II),

worin Y, $R_1$ und $R_2$ die in Anspruch 1 angegebene Bedeutung haben, unter Vermeidung von Sulfonierung

in hochprozentiger Schwefelsäure mit Verbindungen der Formel

$$HOCH_2NHCOCH_2X \qquad (III),$$

worin X die in Anspruch 1 angegebene Bedeutung hat, zu Zwischenprodukten der Formel

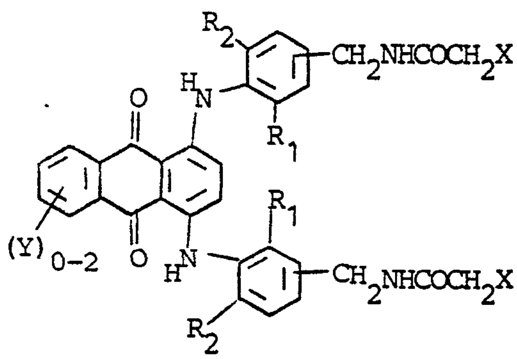

(IV)

umsetzt und diese ohne Isolierung durch Zugabe von Oleum sulfoniert.

7. Verwendung der Farbstoffe der Ansprüche 1 bis 4 zum Färben und Bedrucken von stickstoffhaltigen Materialien.

8. Mit den Farbstoffen der Ansprüche 1 - 4 gefärbte oder bedruckte stickstoffhaltige Materialien.